# Europäisches Patentamt

# European Patent Office

# Office européen des brevets

(11) Veröffentlichungsnummer: **0 172 375**
**B1**

(12) **EUROPÄISCHE PATENTSCHRIFT**

(45) Veröffentlichungstag der Patentschrift:
**23.09.87**

(21) Anmeldenummer: **85108337.8**

(22) Anmeldetag: **05.07.85**

(51) Int. Cl.⁴: **F 23 J 15/00**

---

(54) **Vorrichtung zur Erhitzung eines Fluidums und zur Reinigung der Abgase von Feuerungsanlagen.**

---

(30) Priorität: **09.07.84  CH 3309/84**

(43) Veröffentlichungstag der Anmeldung:
**26.02.86 Patentblatt 86/9**

(45) Bekanntmachung des Hinweises auf die Patenterteilung:
**23.09.87 Patentblatt 87/39**

(84) Benannte Vertragsstaaten:
**AT BE CH DE FR GB IT LI LU NL SE**

(56) Entgegenhaltungen:
**AT-B-56 994**
**AT-B-306 216**

(73) Patentinhaber: **VTH AG Verfahrenstechnik für Heizung, Heiligkreuzstrasse 18, FL- 9490 Vaduz/Fürstentum (LI)**

(72) Erfinder: **Füllemann, Jörg, Obere Häuser, CH- 7302 Mastrils (CH)**

(74) Vertreter: **Riederer, Conrad A., Dr., Bahnhofstrasse 10, CH- 7310 Bad Ragaz (CH)**

---

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung zur Erhitzung eines Fluidums und zur Reinigung der Abgase von Feuerungsanlagen, mit einem Behälter, welcher einen Abgaseinlass aufweist oder mit einem Brenner versehen ist, Mitteln zur Erzeugung eines Sprühregens, einer Pumpe zur Förderung der Flüssigkeit für die Erzeugung des Sprühregens, einem Lüfter zur Förderung der Abgase, und einem Wärmetauscher, der im Behälter angeordnet ist, um Wärme vom Abgas und/oder Wasser auf das zu erhitzende Fluidum zu übertragen.

Bei Grossanlagen, z. B. Kraftwerken, Kehrichtverbrennungsanlagen und dergleichen, sind seit längerer Zeit verschiedene Verfahren zum Reinigen von Abgasen im Einsatz. Während also im industriellen Bereich Massnahmen zur Reinhaltung der Luft eingesetzt werden, ist dies bei Feuerungsanlagen, wie sie bei Millionen von Ein- und Mehrfamilienhäusern zur Raumheizung und zur Warmwasserbereitung verwendet werden, praktisch nicht der Fall. In diesen Feuerungsanlagen werden jedoch gesamthaft wesentlich grössere Mengen von umweltbelastenden fossilen Brennstoffen verbrannt, als in den industriellen Anlagen. Dementsprechend ist auch der Anteil der Raumheizung und der Warmwasserbereitung an der Luftverschmutzung besonders gross. Dieses Problem ist schon seit längerer Zeit bekannt, doch sind erst in neuester Zeit Versuche unternommen worden, Vorrichtungen zum Reinigen der Abgase zu schaffen, die auch für kleine Feuerungsanlagen befriedigend funktionieren und auch wirtschaftlich tragbar sind.

Dem Bau einer gut funktionierenden und wirtschaftlichen Abgasreinigungsanlage für relativ kleine Feuerungsanlagen stellten sich erhebliche technische Probleme entgegen. Bei der Nassreinigung ergab sich bei relativ kleiner Dimensionierung eine erhebliche Verstopfunosgefahr und es konnte zudem kein akzeptabler Wirkungsgrad erreicht werden.

Durch die deutsche Offenlegungsschrift 31 22 026 ist eine Vorrichtung zur Nassreinigung von feststoffbeladenen Gasen bekannt geworden. · Diese Vorrichtung hat zur Aufgabe, verschmutzte Gase mit geringem Energieaufwand zu reinigen, um den Anforderungen der Industrie und der Umwelt gerecht zu werden. Um die Verstopfungsgefahr zu vermeiden, wird vorgesehen, die Waschflüssigkeit ohne Sprühdüsen zu zerstäuben. Um dies zu ermöglichen, ist eine Sprühpumpe vorgesehen, die ein Steigrohr aufweist, um das Wasser aus einem Behälter zu fördern. Das Steigrohr endet oben an einer runden Scheibe und ist rundum mit Austrittsöffnungen versehen. Durch diese Öffnungen strömt die Waschflüssigkeit unter der Scheibe nach aussen und wird von der Scheibe mit derartiger Geschwindigkeit abgeschleudert, dass sehr kleine Flüssigkeitströpfchen gebildet werden. In einem gesonderten Raum oberhalb der Sprühpumpe ist ein vom gleichen Motor wie die Sprühpumpe angetriebener Radiallüfter vorgesehen, der die Aufgabe hat, die Abgase durch die Reinigungsvorrichtung zu fördern. Eine Zentrifuge, die den Lüfter umgibt und auf der Antriebswelle ohne direkten Antrieb gelagert ist, wird durch die vom Lüfter verursachte Strömung in Rotation versetzt. Dadurch wird ein Sog auf die im Abgas enthaltenen Schwerstoffe ausgeübt, die dann nach unten ausgetragen werden. Das Abgas hingegen verlässt die Zentrifuge nach oben. Nachteilig ist bei dieser Vorrichtung die relativ geringe Abscheidungswirkung für gasförmige Schadstoffe, wie z. B. Schwefeldioxid. Auch findet keine Wärmerückgewinnung statt.

Es ist Aufgabe der vorliegenden Erfindung, eine Vorrichtung der eingangs erwähnten Art so zu verbessern, dass ein hoher Wirkungsgrad, eine grosse Reinigungswirkung und eine grosse Betriebssicherheit erzielt wird.

Gemäss der Erfindung wird dies dadurch erreicht, dass eine Rückführung für einen Teil des vom Lüfter geförderten Abgases zum Lüftereingang vorgesehen ist. Dadurch, dass der Lüfter nicht nur zur Förderung der Abgase durch die Reinigungsvorrichtung, sondern auch zur mehrmaligen Zirkulation eines Grossteils derselben in dem vom Sprühnebel erfüllten Behälter dient, steht eine relativ lange Zeit für den Stoff- und Wärmeaustausch zwischen Abgas und Wassertröpfchen zur Verfügung. Dies wiederum bewirkt sowohl eine Erhöhung des Wirkungsgrades der Reinigung als auch eine Erhöhung der Wärmegewinnung.

Von besonderer Bedeutung ist auch, dass die Leitung zur Förderung der Flüssigkeit zum Lüfter führt. Der Lüfter dient somit auch als Mittel zur Erzeugung eines Sprühregens. Die herkömmlichen Mittel zur Erzeugung eines Sprühregens, z. B. Tröge mit Öffnungen, haben den Nachteil, dass sie zu Verstopfung neigen und relativ grosse Tropfen erzeugen. Es wurde jedoch gefunden, dass der Wärmeübergang und die Reinigungswirkung erhöht werden können, wenn möglichst kleine Tropfen erzeugt werden. Es sollte also ein Sprühregen erzeugt werden, den man besser als Sprühnebel bezeichnet. Wird nun Wasser auf den schnell rotierenden Lüfter geleitet, so hat dies eine äusserst feine Verteilung zur Folge, so dass ein Sprühnebel erzeugt wird.

Vorteilhaft ist der Lüfter von einem rohrförmigen Leitblech umgeben. Dadurch wird eine weitere Zerkleinerung der Wassertröpfchen erreicht. Zugleich erlaubt das Leitblech eine Druckerhöhung. Um eine besonders günstige Druckerhöhung zu erreichen, kann das Leitblech exzentrisch angeordnet sein. Das Leitblech weist auch vorteilhaft eine Vielzahl von Öffnungen auf, so dass ein Teil der Wassertröpfchen durch die Öffnungen in den Zwischenraum zwischen Leitblech und Sprühkammerwandung fliegen · kann. Ferner findet eine weitere Zerkleinerung der Wassertröpfchen durch Aufprall und durch Abreissen einer Wasserschicht an den Lochkanten unter dem Einfluss des vom Lüfter geförderten Abgases statt.

Zweckmässigerweise ist das Leitblech relativ zum Lüfter axial verstellbar. Dies ermöglicht es, das Ausmass der Rezirkulation von Abgas zu regeln. Vom Abgaseinlass oder vom Brenner kann ein Abgasrohr zum Lüftereingang führen. Um die Rückführmenge zu regeln, kann beim Abgasrohr ein Schieber vorgesehen sein.

Mit besonderem Vorteil weist der Abgaseinlass eine Wasserspülung auf, um im Betrieb die Innenfläche des Abgaseinlasses mit einer Wasserschicht zu bedecken. Dadurch wird vermieden, dass der Abgaseinlass stark erhitzt wird und sich Ablagerungen bilden, welche die Betriebssicherheit beeinträchtigen. Der Abgaseinlass wird vorteilhaft über dem Lüfter angeordnet. Dies ermöglicht es, sowohl Wasser als auch Abgase gemeinsam dem Lüfter zuzuführen. Zweckmässigerweise wird der Abgaseinlass durch einen praktisch koaxial zum Lüfter angeordneten Trichter gebildet, der einen tangential angeordneten Wassereinlauf aufweist. Auf diese Weise kann mit einfachen Mitteln die gewünschte Wasserschicht an der Innenfläche des Trichters gebildet werden, welche diesen vor unerwünschten Ablagerungen schützt.

Eine zweckmässige Ausführungsform der Erfindung sieht vor, dass mindestens eine Dünnschichtvorrichtung, z. B. ein mit dem Wasser benetztes Steinbett, vorgesehen ist, durch welches die Abgase geführt werden. Das Wasser bildet dabei auf den Steinen einen dünnen Film, der sehr rasch Wärme aufnimmt und mindestens teilweise verdampft. Es ist aber nicht nur ein grosser Wärmeaustausch vorhanden, sondern auch ein erheblicher Stoffaustausch, indem Schadstoffe aus den Abgasen direkt in das Wasser übertreten können. Besonders gross ist der Stoffaustausch, wenn sich Abgase und verdampftes Wasser vermengen. Im Steinbett entsteht auch eine hohe Turbulenz, welche diesen Stoffaustausch begünstigt. Ein besonderer Vorteil des Steinbetts ist auch seine schalldämpfende Wirkung. Die sonst üblichen Verbrennungsgeräusche werden praktisch eliminiert. Massgebend beteiligt daran sind dabei das durch die Steine geschaffene schalldämpfende Labyrinth und der durch die Abkühlung der Gase entstehende plötzliche Druckabfall. Wenn hier von einem Steinbett die Rede ist, so erfolgt dies nur als Ausführungsbeispiel einer vorteilhaften hitze- und wasserbeständigen Dünnschichtvorrichtung. Steine, insbesondere Kalksteine, stellen ein billiges Material dar, das sogar zusätzlich noch als Neutralisierungsmittel dienen kann. Möglich wäre aber auch die Verwendung von anderen Mitteln zur Bildung von Rieselfilmen, z. B. von Keramikplatten mit einer Vielzahl von Durchlassen für Wasser und Abgase, von Röhren, in denen Abgase und Rieselfilm z. B. im Gegenstrom fliessen, usw. Die Abgase besitzen nach dem Verlassen der Dünnschichtvorrichtung ein erheblich kleineres Volumen und haben eine verhältnismässig geringe Geschwindigkeit. Dadurch wird der Wärmeaustausch begünstigt.

Der Lüfter ist vorteilhaft in einem Sprühraum angeordnet, der mindestens zum Teil durch die Dünnschichtvorrichtung begrenzt ist. Wenn z. B. der Sprühraum unten durch die Dünnschichtvorrichtung begrenzt ist und zwischen der Aussenwandung des Sprühraums und der Innenwandung des Behälters ein Zwischenraum besteht, so können die Abgase durch diesen Zwischenraum fliessen, bevor sie den Behälter verlassen. Es wird daher vorteilhaft vorgesehen, dass der Wärmetauscher sich in diesen Zwischenraum erstreckt, um noch eine Kondensation von Wasser zu ermöglichen, bevor die Abgase den Behälter verlassen. Der untere Teil des Behälters kann als Wasserspeicher dienen, wobei in diesem Wasserspeicher ein Wärmetauscher angeordnet ist, um die im Wasser enthaltene Wärme auf das zu erhitzende Fluidum zu übertragen. Dieser Wärmetauscher wird vorteilhaft durch ein schraubenförmig gewundenes Rippenrohr gebildet. Diese Ausführung ist sehr einfach und billig.

Im Behälter kann auch ein Brennraum vorgesehen sein. In diesem Falle dient die Reinigungsanlage zugleich als Heizkessel. Die Besonderheit dieses Heizkessels liegt dann allerdings darin, dass ein Grossteil der Wärme nicht durch die Kesselwandung sondern durch direkten Kontakt mit dem Sprühnebel übertragen wird, wobei dann noch eine Übertragung über einen Wärmetauscher auf das zu erhitzende Medium erfolgt. Im Brennraum oder im Abgasrohr ist vorteilhaft ein Wasserspeicher für die Pumpe angeordnet. Dies ermöglicht eine koaxiale Anordnung von Behälter, Wärmetauscher, Sprühraum, Lüfter, Pumpe und Brenner.

Gemäss einer vorteilhaften Ausführungsform ist ein Ablassventil für das im Behälter enthaltene Wasser vorgesehen, sowie ein Niveaufühler und/oder eine PH-Sonde, um beim Überschreiten eines vorbestimmten Niveaus und/oder bei Erreichen eines vorbestimmten pH-Wertes das Ablassventil zu betätigen und überschüssiges Wasser aus dem Wasserbehälter abzulassen und/oder die Dosiervorrichtung zu betätigen, um dem Wasser im Behälter Neutralisierungsmittel zuzuführen. Es kann aber auch eine PH-Messonde vorgesehen sein, welche ein Signal erzeugt, um beim Überschreiten eines vorbestimmten PH-Wertes die Dosiervorrichtung zu betätigen.

Die Erfindung wird nun unter Bezugnahme auf die Zeichnung beschrieben. Es zeigt:

Fig. 1 ein erstes Ausführungsbeispiel der Vorrichtung für den Anschluss an einen Heizkessel,

Fig. 2 ein zweites Ausführungsbeispiel der Vorrichtung, bei welcher der Brenner einen Teil der Vorrichtung bildet, und

Fig. 3 ein drittes Ausführungsbeispiel der Vorrichtung.

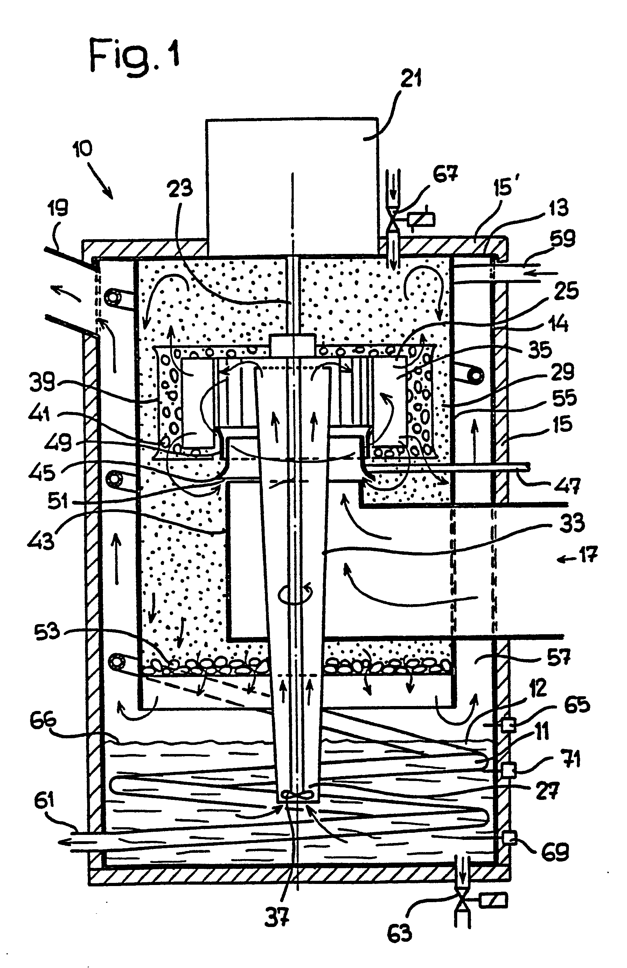

Bei der in Figur 1 dargestellten Vorrichtung 10 wird die im Abgas einer Feuerungsanlage enthaltene Wärme zu einem grossen Teil auf das Wasser 12 übertragen und dann mittels des Wärmetauschers 11 vom Wasser weiter auf das zu erwärmende Fluidum übertragen. Die Vorrichtung 10 besteht im wesentlichen aus dem durch einen Deckel 13 verschlossenen Behälter 14, in welchem der Wärmetauscher 11 angeordnet ist. Der Behälter 14 ist durch eine Isolation 15, z. B. Glaswollematten, wärmeisoliert. Auch der Deckel 13 besitzt eine Wärmeisolation 15'. Der Behälter 14 besitzt einen Abgaseinlass 17 und einen Abgasauslass 19. Die Abgase treten mit einer relativ hohen Temperatur, z. B. 150°, ein und verlassen den Behälter mit einer relativ tiefen Temperatur, z. B. 35°C.

Am Deckel 13 ist ein Motor 21 befestigt, welcher über die Welle 23 einen Lüfter 25 und eine Pumpe 27 antreibt. Der Lüfter 25 dient der Förderung der Abgase. Beim gezeigten Ausführungsbeispiel hat er ferner die Aufgabe, einen Teil der Abgase in einem Sprühraum 29 umzuwälzen. Der Lüfter 25 dient aber auch als Mittel zur Erzeugung eines feinen Sprühregens oder Sprühnebels. Zu diesem Zweck führt die Pumpe 27 über das Förderrohr 33 Wasser zum Lüfter 25. Wenn das Wasser auf die Schaufeln 35 des Lüfters 25 auftrifft, wird es fein zersprüht und bildet im Sprühraum 29 einen feinen Sprühregen oder -nebel.

Beim gezeigten Ausführungsbeispiel ist die Pumpe 27 eine Tauchpumpe, deren Pumpenrad 37 im unteren Teil des Behälters 14 angeordnet ist, um Wasser durch das Förderrohr 33 zum Lüfter 25 zu pumpen.

Der Lüfter 25 wird vorteilhaft von einem rohrförmigen Leitblech 39 umgeben, das etwas exzentrisch angeordnet ist, um einen relativ hohen Förderdruck zu erreichen. Das Leitblech 39 weist eine Vielzahl von Öffnungen 41 auf, durch welche Wassertröpfchen hindurchgeschleudert werden können. Das Abgasrohr 43 führt vom Abgaseinlass 17 in die Nähe des Eingangs des Lüfters 25. Dort befindet sich ein rohrförmiger Schieber 45, der mittels eines schematisch eingezeichneten Gestänges 47 axial in einem fest angeordneten Leitrohr 49 verschoben werden kann, um die Rückführungsöffnung 51 zu vergrössern oder zu verkleinern. Wird die Öffnung 51 vergrössert, so wird ein grösserer Teil der vom Lüfter 25 geförderten Gas wieder dem Lüftereingang zugeführt und rezirkuliert, so dass eine grössere Zeit für den Stoff- und Wärmeaustausch zwischen Abgas und Wassertröpfchen und Wasserdampf zur Verfügung steht.

Am unteren Ende des Sprühraums 29 ist mindestens eine Dünnschichtvorrichtung 53, z. B. ein Steinbett, vorgesehen. Das versprühte Wasser benetzt dieses Steinbett ständig und tropft dann in den unteren Teil des Behälters.

Wie aus der Zeichnung ersichtlich ist, wird der Sprühraum 29 seitlich durch eine Wandung 55 begrenzt. Es wäre aber auch möglich, anstelle dieser Wandung 55 ein z. B. zwischen Lochblechen angeordnetes Steinbett zu bilden. Zwischen der Wandung 55 des Sprühraums 29 und der Innenwandung des Behälters 14 ist ein Zwischenraum 57 angeordnet, durch welchen die Abgase fliessen können, bevor sie den Behälter durch den Auslass 19 verlassen. Es ist zu beachten, dass der aus einem schraubenförmigen Rippenrohr bestehende Wärmetauscher sich auch in diesen Zwischenraum 57 erstreckt. Dabei führt der Rücklauf 59 vorteilhaft zuerst zu diesem Zwischenraum, während dem der Vorlauf 61 sich unten am Behälter 14 befindet. Die Abgase sind bereits relativ kühl, wenn sie in den Zwischenraum 57 gelangen und werden durch das kalte Rücklaufwasser weiter abgekühlt, wobei das in den Abgasen noch enthaltene Wasser am Wärmetauscher 11 kondensiert.

Es ist zu beachten, dass die Vorrichtung einen weitgehend konzentrischen Aufbau aufweist, was deren Herstellung erheblich vereinfacht und verbilligt.

Da durch die Vorrichtung 10 das bei der Verbrennung von Kohlenwasserstoffen entstehende Wasser kondensiert wird, steigt im Betrieb der Wasserspiegel im Behälter 14 ständig an. Es muss daher von Zeit zu Zeit Wasser aus dem Behälter 14 abgelassen werden. Dazu dient das Magnetventil 63. Dieses Ventil kann beispielsweise durch den Niveaufühler 65 gesteuert werden, welcher bei einem vorbestimmten Niveau des Wasserspiegels 66 das Ventil 63 öffnet und überschüssiges Wasser z. B. in die Kanalisation ablässt. Eine Dosiervorrichtung mit dem Magnetventil 67 dient der dosierten Beimengung von Neutralisationsmittel, z. B. von Kalkmilch, in das Wasser. Das Magnetventil 67 wird von Zeit zu Zeit betätigt, um Neutralisierungsmittel dem Wasser zuzuführen. Diese Betätigung kann beispielsweise durch den Niveaufühler 65 erfolgen. Diese Steuerung ist zweckmässig, weil die Menge des anfallenden Kondensats abhängig ist von der Menge des verbrannten Brennstoffes und somit der Schadstoffproduktion. Es ist aber auch möglich, das Magnetventil 67 durch ein Signal von einem PH-Fühler 69 zu steuern. Mit der Bezugsziffer 71 ist ein Sicherheitsthermostat bezeichnet.

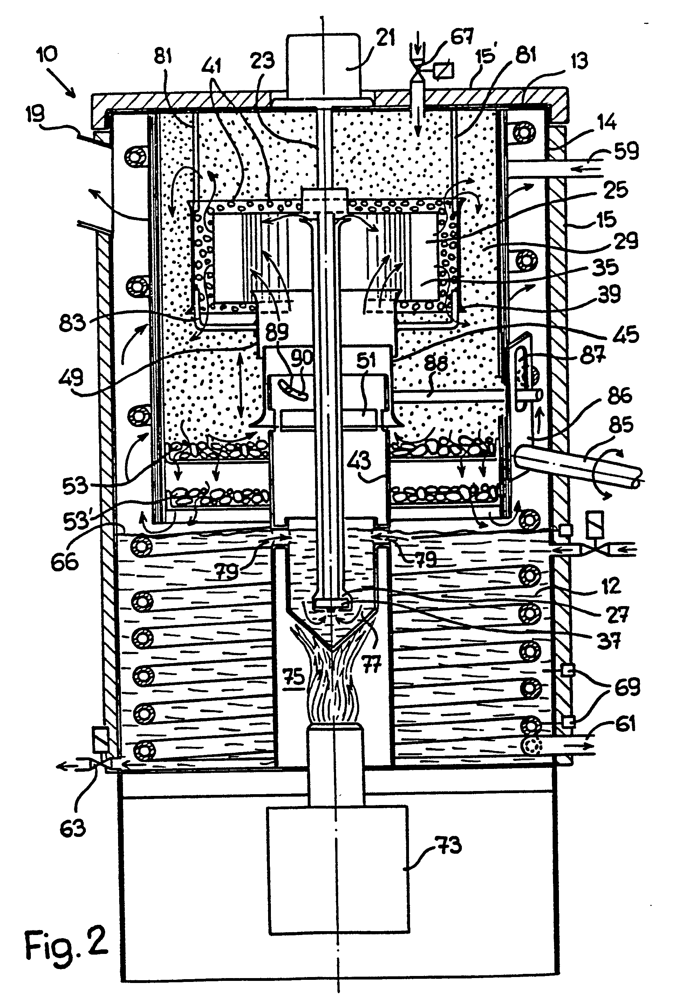

Das in Figur 2 dargestellte Ausführungsbeispiel der Vorrichtung unterscheidet sich vom Ausführungsbeispiel gemäss Figur 1 im wesentlichen dadurch, dass anstelle eines Abgaseinlasses ein Brenner 73 vorgesehen ist. Bei dieser Ausgestaltung ist also die Vorrichtung 10 nicht bloss ein Zusatzgerät zu einem Heizkessel sondern hat die Funktion eines Heizkessels mit integrierter Abgasreinigung. Da aber sich das vorliegende Ausführungsbeispiel nur wenig vom Ausführungsbeispiel von Figur 1 unterscheidet, können die gleichen Bezugsziffern verwendet werden. Im wesentlichen kann ebenfalls auf die vorangegangene Beschreibung verwiesen werden.

Der Brenner 73 ist senkrecht und koaxial angeordnet. Es ist aber für den Fachmann ersichtlich, dass bei gewissen Konstruktionsänderungen auch eine horizontale Anordnung des Brenners möglich wäre. Auch könnte die ganze Vorrichtung horizontal angeordnet werden, wenn gewisse Konstruktionsänderungen vorgenommen werden. Eine senkrechte Anordnung wird jedoch vorgezogen. Für den Brenner 73 ist eine Brennerkammer 75 vorgesehen, welche vorteilhaft vom Wasser 12 im Behälter 14 umgeben ist. Ein Teil der vom Brenner erzeugten Wärme wird daher direkt auf das sich im unteren Teil des Behälters 14 befindliche Wasser übertragen. In der Brennkammer 75 befindet sich der Wasserspeicher 77 für die Pumpe 27. Dieser Wasserspeicher 77 kommuniziert mit dem Behälter 14 über die rohrförmigen Anschlüsse 79. Die Brennkammer 75 ist mit dem Abgasrohr 43 verbunden.

Wie bereits erwähnt wurde, funktioniert die Vorrichtung gemäss Figur 2 gleich wie jene von Figur 1. Es ist auch ersichtlich, dass wenn der Brenner 73 weggelassen würde, die Brennkammer 75 als Abgaseinlass dienen könnte, wie der Teil 17 in Figur 1.

Abschliessend sei noch auf einige konstruktive Details verwiesen. Das Leitblech 39 ist an Stäben 81 am Deckel 13 befestigt. Das Leitrohr 49 ist mit den Trägern 83 mit dem Leitblech 39 verbunden.

Der rohrförmige Schieber ist auf dem Abgasrohr 43 verschiebbar, um die Rückführungsöffnungen 51 im Abgasrohr freizugeben oder mehr oder weniger stark zu verschliessen. Zu dieser Verschiebung genügt es, den Stab 85 zu drehen. Durch das am Stab 85 befestigte Glied 86 mit dem Langloch 87 wird der Stab 88 bewegt, so dass der Schieber 45 verdreht wird. Da sich am Schieber ein Stift 89 befindet, der in einem schrägen Schlitz 90 des Abgasrohrs läuft, erfolgt eine axiale Verschiebung des Schiebers.

Um die Reinigungswirkung zu erhöhen, sind beim gezeigten Ausführungsbeispiel zwei Dünnschichtvorrichtungen 53, 53' vorgesehen. Es ist ersichtlich, dass relativ dicke Steinbette oder eine Anzahl von hintereinander angeordneten Steinbetten möglich sind, weil der Lüfter 25 einen genügenden Druck schafft, um den durch solche Dünnschichtvorrichtungen 53, 53' geschaffenen Durchflusswiderstand zu überwinden. Als Brenner 73 wird zweckmässigerweise ein Ölvergasungsbrenner verwendet, weil Vergasungsbrenner praktisch russ- und kohlenwasserstoffreie Abgase liefern.

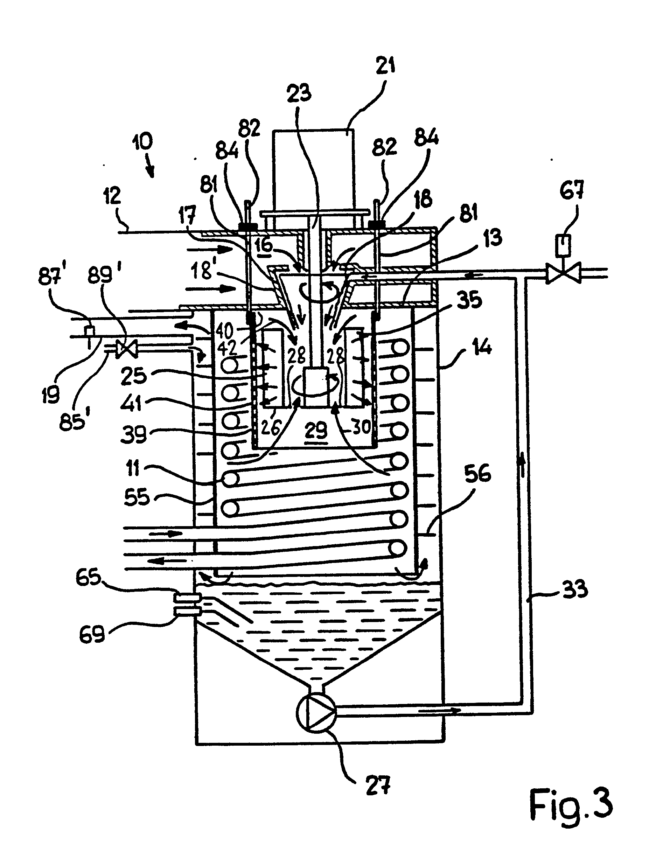

Ein besonders vorteilhaftes Ausführungsbeispiel der Vorrichtung 10 ist in Figur 3 dargestellt. Diese Ausführungsform stellt eine erhebliche Vereinfachung gegenüber der Ausführungsform von Figur 1 dar. Die Vorrichtung 10 besteht aber wiederum im wesentlichen aus dem durch einen Deckel 13 verschlossenen Behälter 14, in welchem der Wärmetauscher 11 angeordnet ist. Der Behälter 14 ist durch eine nicht eingezeichnete Isolationsschicht wärmeisoliert. Mit der Bezugsziffer 17 ist der Abgaseinlass bezeichnet. Diese Abgase aus einem Heizkessel können durch das Rohr 12 in den Raum 16 und von dort in den trichterförmigen Abgaseinlass 17 in den Behälter 14 strömen. Der Raum 16 und insbesondere die Aussenseite des Trichters 17 ist mit einer Wärmeisolation 18' versehen. Nach dem Durchlauf durch den Behälter 14 verlassen die Abgase den Behälter 14 durch den Abgasauslass 19. Über dem Raum 16 befindet sich der Motor 21, welcher über die Welle 23 den Lüfter 25 antreibt. Wie bei den übrigen Ausführungsbeispielen handelt es sich um einen Radiallüfter. Bei diesem Lüfter 25 weist jedoch die die Schaufeln 35 tragende Scheibe 26 eine Anzahl von Öffnungen 28 auf, durch welche eine Rezirkulation von Abgas erfolgen kann, wie dies durch die Pfeile 30 angedeutet ist. Der Lüfter 25 ist von einem rohrförmigen Leitblech 39 umgeben, welches eine Vielzahl von Öffnungen 41 aufweist.

Der Lüfter 25 besitzt eine Mehrfachfunktion. Er dient der Förderung der Abgase durch die Vorrichtung hindurch, bewirkt aber auch eine Zirkulation der Abgase im Sprühraum 29 und wirkt auch als Mittel zur Erzeugung eines feinen Sprühregens oder Sprühnebels. Zu diesem Zweck führt die Umwälzpumpe 27 über das Förderrohr 33 Wasser zur Wasserspülung 18 des Abgaseinlasses 17. Dieser Abgaseinlass 17 wird durch einen praktisch koaxial zum Lüfter 25 angeordneten Trichter gebildet, der einen tangential angeordneten Wassereinlauf 18 zur Wasserspülung aufweist. Im Betrieb der Vorrichtung wird daher die Innenfläche des Trichters 17 durch eine Wasserschicht bedeckt, die einen direkten Kontakt der Abgase mit der Innenfläche verhindert. Dies hat den Vorteil, dass sich am Trichter keine Ablagerungen durch Auskristallisierung der im Wasser gelösten Stoffe bilden können. Diese Ausgestaltung des Abgaseinlasses 17 trägt daher erheblich zur Betriebssicherheit der Vorrichtung bei.

Das aus dem Trichter nach unten fliessende Wasser trifft auf die Schaufeln 35 des Lüfters 25 auf und wird dabei fein zersprüht, um im Sprühraum 29 einen feinen Sprühregen oder -nebel zu bilden. Die Wassertröpfchen werden an das Leitblech 39 geschleudert, was zu einer weiteren Zerstäubung führt. Da eine starke Strömung durch die Öffnungen 41 herrscht, reisst der am Leitblech 39 auftretende Wasserfilm an den Öffnungskanten ab, was zur Nebelbildung innerhalb des Behälters 14 beiträgt.

Das Leitblech 39 ist an Stäben 81 aufgehängt. Die Stäbe 81 weisen oben ein Gewinde 82 auf, in welches Muttern 84 eingeschraubt sind. Durch Drehen der Muttern kann daher das Leitblech 39 axial in Bezug auf den Lüfter 25 verschoben werden.

Dies ermöglicht eine Regelung der Rezirkulation der Abgase im Behälter. Wird nämlich das Leitblech 39 abgesenkt, so vergrössert sich der Spalt 40, so dass auch durch diesen Spalt 40 mehr Abgas einströmen kann, wie dies durch die Pfeile 42 dargestellt wird.

Wiederum ist ein Niveaufühler 65 und ein PH-Fühler 69 vorgesehen. Zur dosierten Beigabe eines Neutralisationsmittels dient das Magnetventil 67. In Bezug auf die Funktion dieser Elemente kann auf die Beschreibung in Figur 1 verwiesen werden.

Es ist noch zu beachten, dass bei diesem Ausführungsbeispiel der Wärmetauscher 11 innerhalb des Raumes angebracht ist, welcher durch die Wandung 55 begrenzt wird. An der Wandung 55 ist ein Band 56 schraubenförmig angeordnet. Durch diese Massnahmen wird ein besonders guter Wärmeaustausch bewirkt, so dass die Gase den Auslass 19 mit einer Temperatur verlassen, die nur wenige Grade über der Rücklauftemperatur liegt. Statt einem Band 56 könnten aber auch andere Mittel vorgesehen sein, um den Weg zu vergrössern, den die Abgase zurücklegen müssen. So könnten beispielsweise Rippen vorgesehen sein. Das schraubenförmige Band 56 hat jedoch einen besonderen Vorteil, wenn es so ausgebildet ist, dass beim Einlass von Frischwasser aus der Leitung 85' dieses schraubenförmig an der Wandung 55 hinunterfliesst und eine Kühlung dieser Wandung 55 als auch des emporsteigenden Abgases bewirkt. Frischwasser kann beim Ansprechen eines Temperaturschalters 87' im Falle einer Störung durch automatisches Öffnen eines Ventils 89' eingelassen werden.

## Patentansprüche

1. Vorrichtung zur Erhitzung eines Fluidums und zur Reinigung der Abgase von Feuerungsanlagen, mit einem Behälter (14), welcher einen Abgaseinlass (17) aufweist oder mit einem Brenner (73) versehen ist, Mitteln zur Erzeugung eines Sprühregens, einer Pumpe (27) und einer Leitung (33) zur Förderung der Flüssigkeit für die Erzeugung des Sprühregens, einem Lüfter (25) zur Förderung der Abgase, und einem Wärmetauscher (11), der im Behälter (14) angeordnet ist, um Wärme vom Abgas und/oder Wasser auf das zu erhitzende Fluidum zu übertragen, dadurch gekennzeichnet, dass eine Rückführung (51) für einen Teil des vom Lüfter (25) geförderten Abgases zum Lüftereingang vorgesehen ist.

2. Vorrichtung nach Anspruch 1, dadurch gekennzeichnet, dass die Leitung (33) zur Förderung der Flüssigkeit zum Lüfter (25) führt, so dass der Lüfter (25) auch als Mittel zur Erzeugung des Sprühnebels dient.

3. Vorrichtung nach Anspruch 1 oder 2, dadurch gekennzeichnet, dass der Lüfter (25) von einem rohrförmigen Leitblech (39) umgeben ist.

4. Vorrichtung nach Anspruch 3, dadurch gekennzeichnet, dass das Leitblech (39) eine Vielzahl von Öffnungen (41) aufweist.

5. Vorrichtung nach Anspruch 3 oder 4, dadurch gekennzeichnet, dass das Leitblech (39) exzentrisch angeordnet ist.

6. Vorrichtung nach einem der Ansprüche 3 bis 5, dadurch gekennzeichnet, dass das Leitblech (39) relativ zum Lüfter (25) axial verstellbar ist.

7. Vorrichtung nach einem der Ansprüche 1 bis 5, dadurch gekennzeichnet, dass vom Abgaseinlass (17) oder vom Brenner (73) ein Abgasrohr (43) zum Eingang des Lüfters (25) führt, und dass beim Abgasrohr (43) ein Schieber (45) zur Regelung der Rückführmenge vorgesehen ist.

8. Vorrichtung nach einem der Ansprüche 1 bis 6, dadurch gekennzeichnet, dass der Abgaseinlass (17) eine Wasserspülung (18) aufweist, um im Betrieb die Innenfläche des Abgaseinlasses mit einer Wasserschicht zu bedecken.

9. Vorrichtung nach Anspruch 8, dadurch gekennzeichnet, dass der Abgaseinlass (17) über dem Lüfter (25) angeordnet ist.

10. Vorrichtung nach Anspruch 8 oder 9, dadurch gekennzeichnet, dass der Abgaseinlass (17) durch einen praktisch koaxial zum Lüfter (25) angeordneten Trichter gebildet wird, der einen tangential angeordneten Wassereinlauf (18) aufweist.

11. Vorrichtung nach einem der Ansprüche 1 bis 5, dadurch gekennzeichnet, dass mindestens eine Dünnschichtvorrichtung (53, 53'), z. B. ein mit Wasser benetztes Steinbett vorgesehen ist, durch welches die Abgase geführt werden.

12. Vorrichtung nach einem der Ansprüche 1 bis 8, dadurch gekennzeichnet, dass der Lüfter (25) in einem Sprühraum (29) angeordnet ist, der mindestens zum Teil durch die Dünnschichtvorrichtung (53, 53') begrenzt ist.

13. Vorrichtung nach Anspruch 12, dadurch gekennzeichnet, dass der Sprühraum (29) unten durch die Dünnschichtvorrichtung (53, 53') begrenzt ist, und dass zwischen der Wandung (55) des Sprühraums und der Innenwandung des Behälters (14) ein Zwischenraum (57) besteht, durch welchen die Abgase fliessen können, bevor sie den Behälter (14) verlassen.

14. Vorrichtung nach einem der Ansprüche 1 bis 13, dadurch gekennzeichnet, dass der untere Teil des Behälters (14) als Wasserspeicher ausgebildet ist und dass der Wärmetauscher (11) in diesem Wasserspeicher angeordnet ist.

15. Vorrichtung nach Anspruch 14, dadurch gekennzeichnet, dass sich der Wärmetauscher (11) in den oberen Teil des Behälters (14) erstreckt, durch welchen die Abgase fliessen.

16. Vorrichtung nach einem der Ansprüche 1 bis 15, dadurch gekennzeichnet, dass im Behälter (14) eine Brennkammer (75) vorgesehen ist.

17. Vorrichtung nach Anspruch 16, dadurch gekennzeichnet, dass im Brennraum (75) oder im Abgasrohr (43) ein Wasserspeicher (77) für die Pumpe (27) angeordnet ist.

18. Vorrichtung nach einem der Ansprüche 1 bis 17, dadurch gekennzeichnet, dass ein Ablassventil (63) für das im Behälter (14) enthaltene Wasser vorgesehen ist, sowie ein Niveaufühler (65) und/oder eine pH-Sonde (69), um beim Überschreiten eines vorbestimmten Niveaus (66) und/oder bei Erreichen eines vorbestimmten pH-Wertes das Ablassventil zu betätigen und überschüssiges Wasser aus dem Wasserbehälter (14) abzulassen und/oder eine Dosiervorrichtung (67) zu betätigen, um dem Wasser im Behälter (14) Neutralisierungsmittel zuzuführen.

19. Vorrichtung nach einem der Ansprüche 1 bis 18, dadurch gekennzeichnet, dass im Behälter (14) ein von einer Wandung (55) begrenzter Sprühraum (29) vorgesehen ist, und dass an der Wandung (55) ein schraubenförmiges Band (56) angeordnet ist.

20. Vorrichtung nach Anspruch 19, dadurch gekennzeichnet, dass die Frischwasserleitung (85) beim Oberteil des schraubenförmigen Bandes (56) mündet, und dass ein Ventil (89') für das Frischwasser von einem Temperaturschalter (87') betätigbar ist, wenn die Abgastemperatur einen vorbestimmten Wert überschreitet.

21. Vorrichtung nach einem der Ansprüche 1 bis 20, dadurch gekennzeichnet, dass der Brenner (73) ein Vergasungsbrenner ist.

## Claims

1. Device for heating a fluid and to clean waste gases from heating systems, comprising a container (14) having waste gas inlet (17) or being provided with a burner (73), means for generating a mist or rain, a pump (27) and a duct (33) moving the liquid and for generating the mist or rain, a fan (25) to move the waste gases through the device, and a heat exchanger (11) located on the container (14) to transfer heat from the waste gases and/or the liquid to the fluid to be heated, characterized in that, for moving back to the inlet of the fan (25) a part of the waste gases moved by the fan (25) a recirculation means is provided.

2. Device as in claim 1, characterized in that the duct (33) for moving liquid leads to the fan (25), so that the fan (25) also serves as means for generating the mist or rain.

3. Device as in claim 1 or 2, characterized in that the fan (25) is surrounded by a tubular guide (39).

4. Device as in claim 3, characterized in that the tubular guide (39) has a plurality of openings (41).

5. Device as in claim 3 or 4, characterized in that the tubular guide (39) is excentrically located.

6. Device according to one of the claims 3 to 5, characterized in that the tubular guide (39) is axially movable with respect to the fan (25).

7. Device according to one of the claims 1 to 5, characterized in that from waste gas inlet (17) or the burner (73) a flue duct (43) is leading to the inlet of the fan (25), and that at the flue duct (43) a valve (45) is provided to adjust the amount of recirculation.

8. Device according to one of the claims 1 to 6, characterized in that the waste gas inlet (17) comprises flushing means (18) to cover in operation the inner surface of the waste gas inlet (17) with a liquid layer.

9. Device according to claim 8, characterized in that the waste gas inlet (17) is located above the fan (25).

10. Device according to claim 8 or 9, characterized in that the waste gas inlet (17) consists of a funnel located practically coaxially to the fan (25), said funnel having a tangential liquid inlet (18).

11. Device according to one of the claims 1 to 5, characterized in that at least one thin film device (53, 53'), for example a layer of stones wetted by the liquid, is provided through which layer the waste gases are moved.

12. Device as claimed in one of the claims 1 to 8, characterized in that the fan (25) is located in a sprayroom (29) being at least partially enclosed by the thin film device (53, 53').

13. Device according to claim 12, characterized in that the sprayroom (29) is defined at the bottom by the thin film device (53, 53'), and that between the wall (55) of the sprayroom (29) and the inner wall of the container (14) there is an intermediate space (57) through which the waste gases can flow prior to leaving the container (14).

14. Device according to one of the claims 1 to 13, characterized in that the lower part of the container (14) serves as liquid reservoir, and that the heat exchanger (11) is located in the liquid reservoir.

15. Device according to claim 14, characterized in that the heat exchanger (11) extends into the upper part of the container (14) through which the waste gases are flowing.

16. Device according to one of the claims 1 to 15, characterized in that a burner chamber (75) is located in the container (14).

17. Device according to claim 16, characterized in that in the burner chamber (75) or in the flue duct (43) a fluid reservoir (77) for the pump (27) is located.

18. Device according to one of the claims 1 to 17, characterized in that a valve (63) for the fluid contained in the container (14) is provided, a liquid level sensor (65) and/or a PH-sensor (69) to actuate the valve (63) when a predetermined level (66) and/or a predetermined PH-value is sensed and to discharge excessive fluid from the fluid container (14) and/or to operate a metering device (67) to feed a neutralizing agent into the fluid in the container (14).

19. Device according to one of the claims 1 to 18, characterized in that in the container (14) a sprayroom (29) is provided which is limited by a wall (55), and that at the wall (55) a helical rib (56) is provided.

20. Device according to claim 19, characterized in that the input (85) for fresh liquid is located at the upper part of the helical rib (56), and that a valve (89) for the fresh liquid is operatable by a temperature switch (87) when the waste gas temperature exceeds a predetermined value.

21. Device according to one of the claims 1 to 20, characterized in that the burner (73) is a gasification burner.

**Revendications**

1. Dispositif pour chauffer un fluide et pour épurer des fumées provenant d'installations de chauffage, comportant un récipient (14) qui est pourvu d'une entrée de fumées (17) ou bien d'un brûleur (73), des moyens pour produire une pluie de pulvérisation, une pompe (27) et un conduit (33) pour canaliser le liquide en vue de la génération de la pluie de pulvérisation, un ventilateur (25) pour assurer le transport des fumées et un échangeur de chaleur (11) qui est disposé dans le récipient (14) afin de transmettre de la chaleur des fumées et/ou de l'eau au fluide à chauffer, caractérisé en ce qu'il est prévu un retour (51) d'une partie des fumées transportées par le ventilateur (25) vers l'entrée du ventilateur.

2. Dispositif selon la revendication 1, caractérisé en ce que le conduit (33) de transport du liquide jusqu'au ventilateur (25) fait en sorte que le ventilateur (25) serve également de moyen de production du brouillard de pulvérisation.

3. Dispositif selon la revendication 1 ou 2, caractérisé en ce que le ventilateur (25) est entouré par une tôle déflectrice (39) de forme tubulaire.

4. Dispositif selon la revendication 3, caractérisé en ce que la tôle déflectrice (39) comporte un grand nombre d'orifices (41).

5. Dispositif selon la revendication 3 ou 4, caractérisé en ce que la tôle déflectrice (39) est disposée excentriquement.

6. Dispositif selon une des revendications 3 à 5, caractérisé en ce que la tôle déflectrice (39) est déplaçable axialement par rapport au ventilateur (25).

7. Dispositif selon une des revendications 1 à 5, caractérisé en ce qu'un tube de fumées (43) s'étend depuis l'entrée de fumées (17) ou depuis le brûleur (73) jusqu'à l'entrée de fumées du ventilateur (25), et en ce que, dans le cas d'un tube de fumées (43), il est prévu un tiroir (45) pour la régulation du débit de retour.

6. Dispositif selon une des revendications 1 à 6, caractérisé en ce que l'entrée de fumées (17) comporte une chasse d'eau (18) pour recouvrir en service la surface intérieure de l'entrée de fumées d'une couche d'eau.

9. Dispositif selon la revendication 6, caractérisé en ce que l'entrée de fumées (17) est disposée au-dessus du ventilateur (25):

10. Dispositif selon la revendication 8 ou 9, caractérisé en ce que l'entrée de fumées (17) est constituée par un entonnoir disposé pratiquement coaxialement au ventilateur (25) et comportant une entrée d'eau (18) orientée tangentiellement.

11. Dispositif selon une des revendications 1 à 5, caractérisé en ce qu'il est prévu au moins un dispositif à couche mince (53, 53'), par exemple un lit de pierres humidifié d'eau, au travers duquel les fumées sont guidées.

12. Dispositif selon une des revendications 1 à 6, caractérisé en ce que le ventilateur (25) est disposé dans un volume de pulvérisation (29) qui est délimité au moins en partie par le dispositif à couche mince (53, 53').

13. Dispositif selon la revendication 12, caractérisé en ce que le volume de pulvérisation (29) est délimité en bas par le dispositif à couche mince (53, 53') et en ce qu'il est prévu entre la paroi (55) du volume de pulvérisation et la paroi intérieure du récipient (14) un volume intercalaire (57) au travers duquel les fumées peuvent s'écouler avant de quitter le récipient (14).

14. Dispositif selon une des revendications 1 à 13, caractérisé en ce que la partie inférieure du récipient (14) est agencée comme un accumulateur d'eau, et en ce que l'échangeur de chaleur (11) est disposé dans cet accumulateur d'eau.

15. Dispositif selon la revendication 14, caractérisé en ce que l'échangeur de chaleur (11) s'étend dans la partie supérieure du récipient (14) au travers de laquelle les fumées s'écoulent.

16. Dispositif selon une des revendications 1 à 15, caractérisé en ce qu'il est prévu une chambre de combustion (75) dans le récipient (14).

17. Dispositif selon la revendication 16, caractérisé en ce qu'il est prévu dans le volume de combustion (75) ou bien dans le tube de fumées (43) un accumulateur d'eau (77) pour la pompe (27).

18. Dispositif selon une des revendications 1 à 17, caractérisé en ce qu'il est prévu une vanne de décharge (63) pour l'eau contenue dans le récipient (14) ainsi qu'un capteur de niveau (65) et/ou une sonde de pH (69), de manière à actionner la vanne de décharge lors d'un dépassement par excés d'un niveau prédéterminé (66) et/ou lors de l'atteinte d'une valeur de pH prédéterminée, et pour évacuer l'eau en excés du récipient d'eau (14) et/ou pour actionner un dispositif de dosage (67) afin d'introduire un agent de neutralisation dans l'eau se trouvant dans le récipient (14).

19. Dispositif selon une des revendications 1 à 18, caractérisé en ce qu'il est prévu dans le récipient (14) un volume de pulvérisation (29) délimité par une paroi (55) et en ce qu'une bande de forme hélicoïdale (56) est disposée sur la paroi (55).

20. Dispositif selon la revendication 19, caractérisé en ce que le conduit d'eau fraîche (85) débouche à la partie supérieure de la bande de forme hélicoïdale (56) et en ce qu'une vanne (89') pour l'eau fraîche peut être actionnée par un interrupteur sensible à la température (87') lorsque la température des fumées dépasse une valeur prédéterminée.

21. Dispositif selon une des revendications 1 à 20, caractérisé en ce que le brûleur (63) est un brûleur à gazéification.

# Fig.1

Fig. 2

Fig.3